## Europäisches Patentamt

## European Patent Office

## Office européen des brevets

(19)

(11) Publication number: **0 057 511**
B1

(12) **EUROPEAN PATENT SPECIFICATION**

(45) Date of publication of patent specification: **04.09.85**

(51) Int. Cl.⁴: **G 06 F 15/16,** G 06 F 13/42

(21) Application number: **82300157.3**

(22) Date of filing: **12.01.82**

(54) **Information processing unit.**

<table>
<tr><td>

(30) Priority: **13.01.81 JP 3382/81**

(43) Date of publication of application:
**11.08.82 Bulletin 82/32**

(45) Publication of the grant of the patent:
**04.09.85 Bulletin 85/36**

(84) Designated Contracting States:
**DE FR GB**

(56) References cited:
**EP-A-0 016 523**
**US-A-3 470 542**
**US-A-4 174 536**

</td><td>

(73) Proprietor: **NEC CORPORATION**
**33-1, Shiba 5-chome, Minato-ku**
**Tokyo 108 (JP)**

(72) Inventor: **Oura, Toshio**
**c/o Nippon Electric Co., Ltd. 33-1 Shiba**
**Gochome**
**Minato-ku Tokyo 108 (JP)**

(74) Representative: **Orchard, Oliver John**
**JOHN ORCHARD & CO. Staple Inn Buildings**
**North High Holborn**
**London WC1V 7PZ (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an information processing unit, and more particularly, to an information processing unit having a circuit for transmitting and/or receiving information and being adapted to be used in a multi-processor system.

In an information handling system, an information processing unit such as a central processor, microprocessor or a one-chip microcomputer is coupled with memories and peripheral equipments (for instance, keyboards, display devices, printers, etc.). The coupling is effected by means of one or more signal lines, and the information processing unit acts usually as a control facility, while the memory or the peripheral equipment acts as a controlled facility. In this meaning, the information processing unit has a function of managing the memory and the peripheral equipment, and the memory and peripheral equipment is designed so as to operate under management of the information processing unit. Among the managements by the information processing unit, representative and important is control of information transmission, wherein the processing unit generates a control signal indicating whether information is to be received (normally called "read control signal" or "write control signal", respectively) and send it to a controlled device. Accordingly, a transmission control circuit for generating and outputting the control signal is necessitated on the side of a unit with the control facility. On the other hand, on the side of a unit or equipment with the controlled facility, a transmission processing circuit is necessitated, which receives the control signal and carries out a processing of information input or output exactly as indicated by the control signal.

In the prior art, a transmission control circuit was designed as an output circuit for control signal output use only, and a transmission processing circuit was designed as an input circuit for the control signal receipt use only. In other words, a hardware was fixedly designed such that a unit with the control facility may operate as a master and a unit with the controlled facility may operate as a slave. In such a master-slave type information handling system, the master side cannot operate as a slave and the slave side cannot operate as a master. Accordingly, unless a transmission control circuit is provided in a unit with the controlled facility to generate and output a control signal, it is impossible to make the master unit (information processing unit) operate virtually as a slave. Therefore an excellent intelligent function cannot be fully utilized in the prior art system.

The similar problem resides in a multi-processor system which is comprised of a plurality of information processing units, particularly in a multi-microprocessor system. Though this system can execute a higher grade of program processing than a single-processor system and therefore will be widely used in the information handling field in the future, it has at present such a problem that a plurality of information processing units are all designed so as to operate as masters and are respectively provided with a transmission control circuit only. Therefore, unless a circuit equivalent to the transmission processing circuit is added independently, information transmission cannot be achieved between the information processing units. Where micro-processors are used as information processing units, a number of external terminals for connecting signal lines cannot be made large. Because, a micro-processor is formed on a semiconductor chip by the semiconductor integrated circuit technique, and an increase in the number of external terminals in semiconductor integrated circuit chip would make a manufacturing cost unexpectedly high.

The multi-processor system is required to achieve information transmission at a high speed for information processing subjected to severe time limitation such as video pattern processing, audio or sound synthesis processing, control processing for medical and diagnostic instruments or aircraft instruments, etc. Moreover, the multi-processor system should be constructed in a minimum space and as simple as possible, and an effort must be made so as not to lose general purpose utility as an information processing unit. The respective processor should be used in both a multi-processor system and a single-processor system.

However, heretofore known information processing units could not fully resolve and meet the above-mentioned problems and requirements, and especially had various shortcomings in a multi-processor system.

It would be easily conceived to add a transmission processing circuit to an information processing unit already provided with a transmission control circuit. In that case, however, a space of the transmission processing circuit is necessitated, and a chip size of a micro-processor becomes large. Accordingly, it is nearly impossible to realize the micro-processor at a low cost. Moreover, the micro-processor necessitates two external terminals for the added transmission processing circuit to receive read and write control signals. In a micro-processor with a limited number of terminals, terminals which are prearranged for information transmission must be allotted for the mentioned terminals for the transmission processing circuit. Consequently, parallel information transmission becomes impossible, and the processor is limited to a serial information transmission use. Therefore, high speed transmission cannot be expected. Furthermore, in a single-processor system provision of the transmission processing circuit and its terminals is wasteful.

On the other hand, a memory-base type multi-processor system would be conceived, in which direct coupling of information processing units operating as masters to each other is avoided and instead a memory that is accessible in common by respective information processing units is used as an information transmission medium. However, this system has a shortcoming that high-speed transmission is very difficult because information must once pass through a memory. In addition, a control signal generator circuit for managing and accessing the memory as well as external terminal therefore becomes necessary, and there is no merit with respect to cost. Furthermore, as system construction and information transmission programming become more complex, an increase in the expense and time for developing these is inevitable.

In contrast, EP A 0016523 (Chivers) describes a processor which can be used as both a master and a slave. This processor has a master interface means and a slave interface means, respectively, and is constructed so as to access another, slave, processor via the slave interface means and to be accessed by another, master, processor via the master interface means. Further, the processor includes a status register storing a control information. The control information is stored therein by the processor itself when the processor operates as the master, while it is stored by another processor to be operated as a master when the processor operates as the slave. A condition of the status register must be always monitored and controlled by the processor itself and by another processor. Therefore, the processor has shortcomings that an overhead time for monitoring is very long and that a monitoring operation is also complex.

Further, an address bus and a data bus of the master interface means must be independent from that of the slave interface means. Therefore, a large number of connector pins are required for connecting the master interface means and the slave interface means to the address and the data buses. This is the big problem in an integrated circuit semiconductor chip wherein a number of pins (terminals) is limited.

It is therefore an object of the present invention to provide an information processing unit which does not require an overhead time in operating as a master or as a slave.

Another object of the present invention is to provide an information processing unit which achieves effective utilization of terminals.

An embodiment of an information processing unit according to the invention defined in claim 1 comprises means for transferring information, means for generating a first input control signal and a first output control signal, means for receiving from external second input control signal and a second output control signal, means for controlling the input/output condition of transferring means such that the transferring means becomes output condition in response to the first input signal or the second output signal and the input condition in response to the first output control signal or the second input control signal, means for generating a mode signal, and means responsive to the mode signal for selecting whether the transferring means is controlled by the first input and output signals or by the second input and output control signals. When the first input and output control signals generated inside of the unit are selected for control the transferring means is controlled by the inside generated input and output control signals which are also transmitted outside. Therefore, the transferring means outputs, in response to the first input control signal, data from the inside of the unit to an external unit which is in turn controlled by the first input control signal from the processing unit of this invention and receives the outputted data. Similarly, the transferring means inputs, in response to the first output control signal, data from the external unit which in turn outputs that data, controlled by the first output control signal from the processing unit. Thus, the processing unit acts as a master unit. When the second input and output control signals received from the outside through the same terminals as those through which the first input and control signals are transmitted outside are selected, the transferring means inputs data from the outside in response to the received second input control signal and outputs data from the inside to the outside in response to the received second output control signal. Therefore, the processing unit acts in this case as a slave unit.

In other words, the mode signal designates whether the information processing unit is to be used as a master or it is to be used as a slave. In response to this designation, when the processing unit is to be used as a master, the transferring means is controlled by the first control signals generated by the generating means, whereas when the processing unit is to be used as a slave, the transferring means is controlled by the second control signals received from an external unit. The mode signal for designating the master or the slave may be set either within the processing unit or externally of the processing unit. In addition, the means for applying the selected control signals to the transferring means can be used in common whenever the processing unit operates as a master and as a slave. Furthermore, as already mentioned, the output terminals of the first control signals to be applied to an external unit when the processing unit operates as a master and the input terminals of the second control signals incoming from an external unit when the processing unit operates as a slave, can be provided in common. These common input/output terminals for the control signals may be used also as terminals through which data is outputted from the processing unit to the external unit or inputted vice versa.

As described above, it is unnecessary for the information processing unit according to the present invention to have a both transmission controlling circuit used solely when it operates as a master and another transmission processing circuit used solely when it operates as a slave. Moreover, since every operation can be processed and controlled by a common circuit, a hardware circuit could be made very small. In addition, since the internal or external control signals are automatically selected depending upon the contents of the storing means, the input/output operation for information is extremely simple.

It is to be noted that the designation of the input/output condition (operating mode) of the transferring means should be effected before the information transmission and also it should be sustained until the information transmission is completed. Accordingly, in the prior art multi-processor system, signal lines for transferring control signals from the slave side to the master side and their terminals had to be provided separately from the control signal lines from the master to the slave and their terminals. However, according to the present invention, the control signal lines and terminals can be made common for the both directions. Moreover, it is unnecessary to independently provide a signal line and a terminal for a signal for setting the processor in the slave condition. Further, the means for controlling the transferring means can be used in common both when the processing unit is to operate as a master and as a slave. Namely, the input terminals and the output terminals for data transfer through the transferring means can be provided in common. The common use of the terminals is quite effective for a micro-processor having a severely limited number of terminals. Furthermore, since the control signal terminals and data terminals can be provided in common, it becomes unnecessary to invade the information transmitting terminals, hence it becomes possible for the first time to transmit information in a parallel form. Therefore, highly efficient and high-speed transmission can be executed by the processing unit of the present invention.

Moreover, the process according to the present invention is applicable to both a multi-processor system and a single-processor system, and in either case under its operating condition no wasteful circuit (unused circuit) is included therein. Accordingly, there is provided an information processing unit of low cost without degrading its general usefulness.

Still further, the information processing unit according to the present invention can achieve information transmission directly with another processor, because it can internally generate the input and output control signals and the mode signal and also it can receive the input and output control signals from the outside. Accordingly, there is no need to provide a medium in a transmission path as is the case with the memory-base system in the prior art, and therefore, the system construction becomes simple and it is possible to achieve high-speed transmission. Especially, if the essence of the present invention is used in an input/output interface section of a micro-processor, an extremely large effect is achieved as will be described later.

The above-mentioned and other objects, features and advantages of the present invention will become more apparent by reference to the following description of a preferred embodiment of the invention taken in conjunction with the accompanying drawings, wherein:

Fig. 1 is a block diagram of an input/output interface section of an information processing unit in the prior art which operates as a master;

Fig. 2 is a block diagram of an input/output interface section of a controlled unit in the prior art which operates as a slave;

Fig. 3 is a block diagram of an input/output interface section of an information processing unit according to one preferred embodiment of the present invention;

Fig. 4 is a detailed circuit diagram of the input/output interface section shown in Fig. 3;

Fig. 5 is a block diagram showing one example of a multi-processor system in which the information processing unit according to the present invention having the input/output interface section shown in Fig. 3 is used as a master; and

Fig. 6 is another block diagram showing another example of a multi-processor system in which the information processing unit according to the present invention having the input/output interface section shown in Fig. 3 is used as a slave.

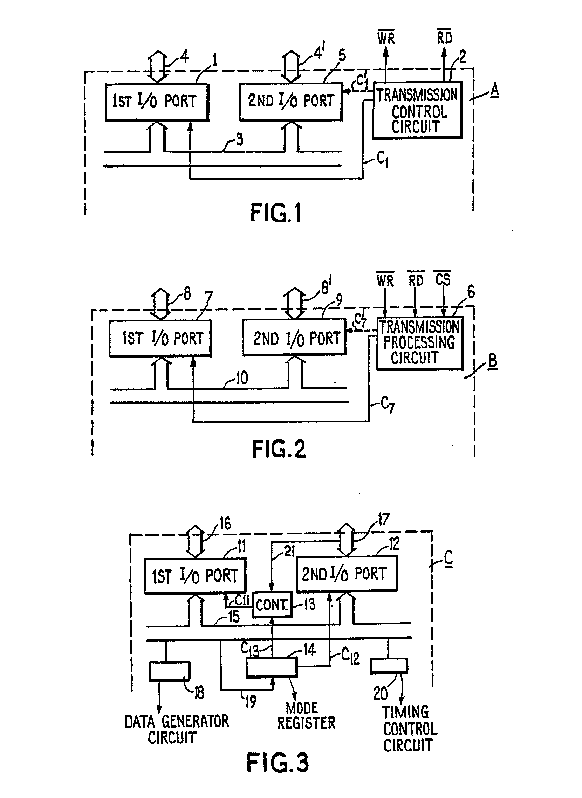

Now description will be made on constructions and operations of an input/output interface section of an information processing unit (master) and a input/output interface section of a controlled unit (for example, a peripheral equipment such as a display device, a printer, etc., or a memory) that is controlled by the information processing unit in the prior art, with reference to Figs. 1 and 2. An input/output circuit is provided on the side of an information processor A as shown in Fig. 1. In this input/output circuit are necessarily provided input/output ports 1 and 5 respectively having registers for temporarily storing information, a control circuit (transmission control circuit) 2 for by itself generating a first control signal (hereinafter called write control signal: WR) and a second control signal (hereinafter called read control signal: RD) which designate that information is to be written in these registers and is to be read from these registers, respectively, and an internal bus 3 to be used as an information transfer path. The input/output ports 1 and 5 are connected via external terminals to external buses 4 and 4', respectively. The control circuit has only the function of outputting the WR and RD signals. On the other hand, an input/output circuit (shown in Fig. 2) which is provided on the side of a controlled apparatus B comprises input/output ports 7 and 9 respectively having registers for temporarily storing information, a control circuit (transmission processing circuit) 6 for receiving the RD and WR signals which are sent from the side of the information processor A and executing the processing of writing information in the registers within the input/output ports of the processing of reading-out information from the registers in response to the received signals, and an internal bus 10. The input/output ports 7 and 9 are connected via external terminals to external buses 8 and 8', respectively.

Here it is assumed that the external buses 4, 4', 8 and 8' and the internal buses 3 and 10 are bidirectional transmission signal lines and the respective external terminals are used as input and output use. The respective ports have a function of inputting and outputting information of one or more bits. It is to be noted that the reason why two input/output ports are provided in each input/output circuit is because it is advantageous when data groups of different kinds such as, for example, a set of segment information and digit information or a set of key scan signal (key strobe output signal) and key signal (key matrix input signal) are transferred at the same time and at a high speed. Accordingly, such ports could be provided any number which is more than one. In addition, in Figs. 1 and 2 the respective control circuits 2 and 6 must apply signals for effecting write and read control to their own input/output ports (for instance, $C_1$ and $C_1'$ to the ports 1 and 5, and $C_7$ and $C_7'$ to the ports 7 and 9).

However, since the control circuits 2 and 6 provided in the input/output interface sections in the prior art have different constructions and functions between the processor A and the apparatus B, there exists the following shortcoming. That is, the input/output circuit on the side of the information processor A has not transmission processing circuit equal to the circuit 6 and its terminal. Therefore, the processor A can control the input/output circuit on the side of the controlled apparatus B, but cannot be controlled by the apparatus B. Accordingly, in a multiprocessor system there is a shortcoming that input/output information control in a microprocessor (information processor) A cannot be executed simply and quickly by another microprocessor equal to the micro-processor A. Even if a transmission processing circuit were to be provided within the information processor A, terminals for receiving the RD signal and WR signal from another processor (not shown) would be necessitated separately. Moreover, in the case where a plurality of information processors are provided, terminals for apply a processor chip selection signal (CS), which designates with what apparatus communication is to be made, is also necessary. Accordingly, in an integrated circuit device having a severely limited number of terminals, this was accompanied by a great disadvantage that the number of terminals to be used would be undesirably increased the cost would be raised and also the apparatus would become large in size.

As described above, in order to make the information processor A in Fig. 1 have a capability of operating as a slave, no solution was conceived other than that the transmission processing circuit 6 in Fig. 2 is in itself added to the information processor A separately from the transmission control circuit 2. On the other hand, if a memory-base system is employed, then there is no need to add the transmission processing circuit 6, but the memory access becomes complexed and the transmission speed is also greatly slowed down.

Referring to Fig. 3 which shows an essential part (an input/output interface section and a control data generating section) of an information processing unit C according to one preferred embodiment of the present invention, the input/output interface section includes a first input/output port 11 coupled via external terminals to an external bus 16, a second input/output port 12 coupled via external terminals to an external bus 17, a port control circuit 13 and a mode register 14. The external buses 16 and 17 are bidirectional buses. The first and second input/output ports 11 and 12 are coupled in common to an internal bus 15. Accordingly, the external buses 16 and 17 can be electrically connected to the internal bus 15 through the input/output ports 11 and 12, respectively. In addition, there is provided a circuit 18 for generating data which designates whether the processor C of Fig. 3 acts as a master or as a slave (operating mode) to be set in the mode register 14, on the basis of a result of execution of an instruction or a program. These data are written in the mode register 14 via the internal bus 15 and a signal line 19. A timing control circuit 20 is also connected to the internal bus 15, which circuit 20 decodes an instruction (for instance, an information transmission instruction) and generates a read control signal (RD) and a write control signal (WR) within the information processor at a predetermined timing.

According to this embodiment, it is assumed that the data set in the mode register 14 are all generated by the data generator circuit 18. In accordance with the data set in the mode register 14, a signal $C_{13}$ is output from the mode register 14. It is to be noted that in the illustrated embodiment the RD and WR signals transmitted from an external apparatus are input to the port control circuit 13 through the external bus 17 and a signal line 21. On the other hand, the RD and WR signals generated by the timing control circuit 20 are input to the port control circuit 13 through the internal bus 15, the second input/output port 12 and the signal line 21, and also they are transferred through the external bus 17 to a controlled apparatus. The first and second input/output ports 11 and 12 both could have nearly the same construction as the heretofore known input/output port as described with reference to Fig. 1. However, the second input/output port 12 is constructed such that is input/output operation may be controlled by a control signal $C_{12}$ that is output in accordance with the data in the mode register 14. The port control circuit 13 responds to the control signal $C_{13}$ issued from the mode register 14 for selecting the external or internal RD and WR signals input through the signal line 21, and applies a signal $C_{11}$ for controlling the input/output condition to the first input/output port 11 according to the selected RD and WR signals.

Now description will be made on a basic operation of an information processor including the above-described circuits elements. At first, data for designating the operating mode is generated in the data generator circuit 18 and set in the mode register 14. According to the data, the signal $C_{12}$ for controlling the second input/output port 12 whether it is brought into an output acknowledgement condition or into an output inhibition condition, is output from the mode register 14. The second input/output port 12 is set in an output condition, the internal write control signal (WR) and the internal read control signal (RD) generated by the timing control circuit 20 are output through that port 12 to the external bus 17 coupling to another apparatus (another information processor or a controlled apparatus), and also they are transferred to the port control circuit 13. In this event, the illustrated information processor operates as a control facility (master). It is to be noted that input/output condition of the first input/output port 11 is controlled by the internal RD and WR signals branched from the external bus 17 through the signal line 21. On the other hand, the second input/output port 12 is set in an output inhibition condition. The external WR and RD signals from the external apparatus are transferred to the port control circuit 13 through the external bus 17 and the signal line 21. Hence, the first input/output port 11 is brought into an input condition or into an output condition depending upon the RD and WR signals which have been externally transferred to the port control circuit 13 through the external bus 17 and the signal line 21. In this event, the information processor C operates as a controlled facility. However, in either event, the input/output port control circuit 13 is controlled by the control signal $C_{13}$ which is output according to the contents of the mode register 14.

It is to be noted that in the second input/output port 12, provision is made such that the internal bus 15 and the external bus 17 can be electrically connected to each other so that upon a particular condition of the mode register 14 the second input/output port 12 may operate merely as an input/output port for information similarly to the first input/output port 11. Here it is assumed that each of the first and second input/output ports 11 and 12 includes at least one (one bit) register (for instance, a flip-flop circuit) for temporarily storing information and input and output buffers for controlling information transmission direction.

According to the illustrated embodiment, depending upon the contents of a mode register, an information processor can operate as a master which can control at least one external apparatus by applying internal RD and WR signals and as a slave which is controlled by at least one external apparatus by receiving external RD and WR signals. Moreover, in either event since information transmission is effected through the external bus 16, the information processor can be coupled directly to another external apparatus through an external bus. In other words, a multi-processor system can be constructed without employing a memory-base system, and therefore, information can be transferred at a high speed. Furthermore, with the provision made in the above-described embodiment, the external and internal RD and WR signals can be transferred through the same terminals, and so, there is no need to separately provide terminals to be solely used for the external and internal signals, respectively. Accordingly, the illustrated arrangement is greatly effective for reduction in size and lowering in cost of the information processor.

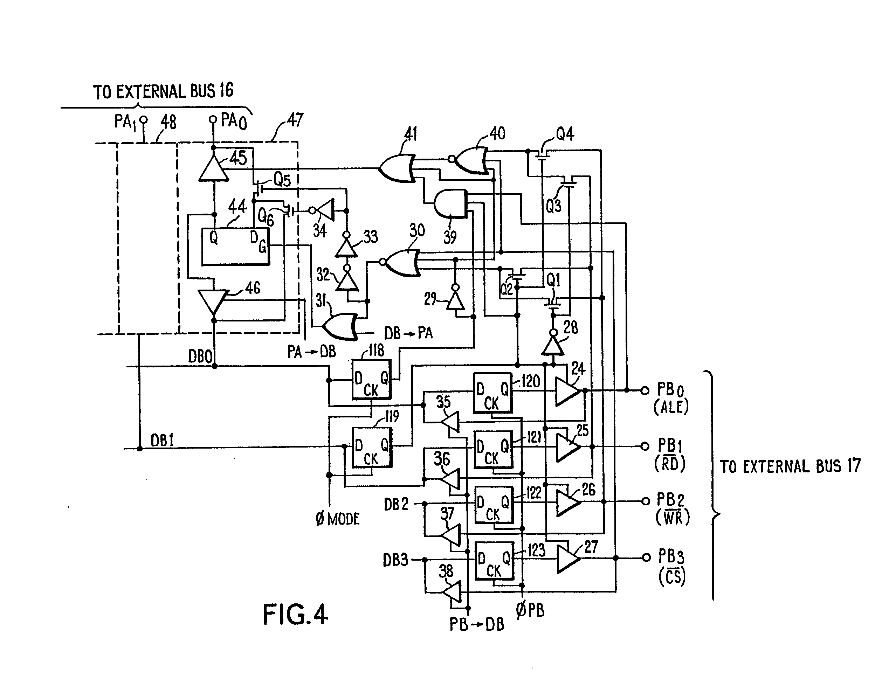

A more detailed circuit diagram corresponding to the block diagram in Fig. 3, is shown in Fig. 4, and in the following the operation of the circuit will be described in detail. In Fig. 4 are illustrated the respective circuit elements of a part of the first input/output port 11, a part of the second input/output port 12, the input/output port control circuit 13 and the mode register 14, and the relation of interconnection therebetween. In the illustrated embodiment, the first input/output port 11 is divided into a plurality of blocks, and each block has a register for temporarily storing information of one bit (for instance, a delay-type flip-flop). The number of blocks is equal to the number of signal lines forming the external bus 16. Furthermore, with regard to the second input/output port 12 also, there are provided nearly similar blocks which are equal in number to the number of signal lines forming the external bus 17. In addition, the first and second input/output ports are wired in common to the corresponding ones of the signal lines forming the internal bus 15. Here, the terminals of the first input/output port 11 connected to the external bus 16 are designated by reference symbols $PA_0 \sim PA_n$, respectively, while the terminals of the second input/output port 12 connected to the external port 17 are designated by reference symbols $PB_0 \sim PB_m$, respectively. In Fig. 4, only one block having a terminal $PA_0$ in the first input/output port (hereinafter called port A) 11 and four blocks having terminals $PB_0 \sim PB_3$ in the second input/output port (hereinafter called port B) 12 are extracted to be shown in detail. It is to be noted that the above-referred numbers $n$ and $m$ are any arbitrary integers, and they could have either an identical value or different values.

As mentioned above, in Fig. 4, reference symbols $DB_0$, $DB_1$, $DB_2$ and $DB_3$ denote a part of the internal data bus 15, reference symbols $PA_0$ and $PA_1$ denote a part of a terminal group of the first input/output port 11, and reference symbols $PB_0(ALE)$, $PB_1(RD)$, $PB_2(WR)$ and $PB_3(CS)$ denote a part of a terminal group of the second input/output port 12. Delay type flip-flops 118 and 119 jointly form a mode register in which data for designating control mode is to be set, which corresponds to the mode register 14 in Fig. 3. These flip-flops would output data (that is, the control signal $C_{13}$ in Fig. 3) when a clock $\phi_{MODE}$ generated by decoding an instruction charges from "0" to "1". On the other hand, reference numerals 120, 121, 122 and 123 designate delay type flip-flops in the respective blocks forming a part of the second input/output port 12. These delay type flip-flips would output the information received through the internal data bus lines $DB_0$, $DB_1$, $DB_2$ and $DB_3$, respectively, when a clock $\phi_{PB}$ generated by decoding an instruction changes from "0" to "1". The information is read out through three-state buffers 24~27 and the corresponding terminals $PB_0$~$PB_3$ to the external bus 17. These buffers 24~27 are controlled by the output signal of the flip-flop 119 forming the mode register 14. When the output of this mode register flip-flop 119 is "0", all the buffers becomes floating and hence output from them is inhibited. Accordingly, at this moment the terminals $PB_0$~$PH_3$ can be used as input terminals. Whereas, when the content of this mode register flip-flop 119 is "1", the information set in the flip-flops 120~123 are output from the respective terminals $PB_0$(ALE), $PB_1$(RD), $PB_2$(WR) and $PB_3$(CS). In other words, these respective terminals are used as output terminals. Here, it is to be noted that in the case where the terminals $PB_0$~$PB_3$ are used as input terminals, the information from an external apparatus can be transferred to the internal bus signal lines $DB_0$~$DB_3$ only when input stage buffers 35~38 are driven by an instruction (PB DB).

On the other hand, with regard to the first input/output port 11, as illustrated in detail only for a representative block 47 corresponding to one bit, each block includes a register (delay type flip-flop) 44 which can temporarily store information of one bit, a buffer 45 for outputting the content of the register 44 to the terminal $PA_0$ and a buffer 46 for outputting the content of the register to the internal bus signal line $DB_0$. The drive condition of the buffer 45 is controlled by an output signal of an OR gate 41, and the drive condition of the buffer 46 is controlled by an instruction (PA→DB). It will be readily imagined that a block 48 having similar circuit elements is provided between the terminal $PA_1$ and the internal bus signal line $DB_1$. The other blocks not shown could be constructed in similar manner.

Now the detail of the input/output port control circuit 13 will be explained. An output signal of an inverter 28 is applied in common to a gate electrode of an enhancement type insulated gate field effect transistor (hereinafter abbreviated as IGFET) $Q_1$ and a gate electrode of a like enhancement type IGFET $Q_3$, in accordance with the content of the mode register flip-flop 119. In addition, the output signal of the mode register flip-flop 119 is directly applied to the respective gate electrodes of enhancement type IGFET's $Q_2$ and $Q_4$. These four IGFET's are used as transfer gates (or selection gates). The source electrode of the IGFET $Q_1$ is connected to the terminal $PB_2$(WR), and the source electrode of the IGFET $Q_2$ is connected to the terminal $PB_1$(RD). The drain electrodes of the IGFET's $Q_1$ and $Q_2$ are connected in common to an input portion of a NOR gate 30.

On the other hand, the source electrode of the IGFET $Q_3$ is connected to the terminal $PB_1$ (RD), and the source electrode of the IGFET $Q_4$ connected to the terminal $PB_2$ (WR). The respective drain electrodes of IGFET's $Q_3$ and $Q_4$ are connected in common to one input portion of an NOR gate 40. Accordingly, if the content of the mode register flip-flop 119 is "0", then the IGFET's $Q_2$ and $Q_1$ are turned OFF, while the IGFET's $Q_1$ and $Q_3$ are turned ON. Consequently, the NOR gate 30 is output the information from the terminal $PB_2$ (WR signal), and the NOR gate 40 is output the information from the terminal ($PB_1$) (RD signal). On the contrary, if the content of the mode register flip-flop 119 is "1", then the IGFET's $Q_2$ and $Q_4$ are turned ON, while the IGFET's $Q_1$ and $Q_3$ are turned OFF. Accordingly, the NOR gate 30 is output the information from the terminal $PB_1$ (RD signal), and the NOR gate 40 is output the information from the terminal $PB_2$ (WR signal). In addition, an output signal from the mode register flip-flop 118 is sent to an inverter 29 and an AND gate 39. The output signal of the inverter 29 is applied in common to the NOR gate 30, the NOR gate 40 and the OR gate 41. The respective output portions of the AND gate 39 and the NOR gate 40 are connected to the input portion of the OR gate 41. The output signal from the OR gate 41 is applied to the control terminal of the output stage buffer 45 in the first input/output port 11. It is to be noted that this output signal is applied in common to the control terminals of the respective output stage buffers within all the other blocks in the first input/output port 11.

Furthermore, the output signal from the NOR gate 30 is applied to the OR gate 31 and a delaying inverter 32. The output of the inverter 32 is further connected to similar delaying inverters 33 and 34 in series. The output signal from the inverter 33 is applied to a gate electrode of an enhancement type IGFET $Q_5$, and the output signal from the inverter 34 is applied to a gate electrode of an enhancement type IGFET $Q_6$. The source electrode of the IGFET $Q_5$ is connected to the terminal $PA_0$, and the source electrode of the IGFET $Q_6$ is connected to the internal data bus signal line $DB_0$. The respective drain electrodes of the IGFET's $Q_5$ and $Q_6$ are connected to a D-input portion of a register (latch circuit) 44 in the first input/output port 11. The register 44 receives an information on the basis of a control signal output from the OR gate 31 in response to an instruction (DB→PA). A Q-output signal of the register 44 is transferred to the three-state buffers 45 and 46.

The signals PA→DB, DB→PA and PB→DB appearing in Fig. 4 are timing control signals respectively generated from the timing control circuit 20 by decoding instructions (for instance, microinstructions read out of a ROM or the like). The signal PA→DB is generated when an instruction that a signal input through the terminals PA should be transferred to the internal bus DB, is executed. The signal DB→PA is generated when an instruction that a signal on the internal bus DB should be transferred to the terminals PA, is executed. The signal PB→DB is generated when an instruction that a signal input through the terminals PB should be transferred to the internal bus DB, is executed. Processings based on these respective instructions are executed within a predetermined machine cycle. The terminals $PB_0$~$PB_3$ serve to output a signal on the internal bus $DB_0$~$DB_3$ to the external bus 17 or to input a signal applied from the external bus 17 to the internal bus $DB_0$~$DB_3$. Furthermore, these terminals are also used as terminals for inputting or outputting the ALE (address latch enable) signal, RD (read control) signal, WR (write control) signal and CS (chip selection signal).

The function of the first and second input/output ports 11 and 12 are controlled by the contents of the flip-flop 118 and 119 to realize four kinds of interface modes A, B, C and D as indicated in Table-1.

TABLE I

| Interface Mode | Q-output of flip-flop 118 | Q-output of flip-flop 119 | Functions of the first and second input/output ports |
|---|---|---|---|
| A | 0 | 0 | The first I/O port is in an output mode, and the second I/O port is in an input mode. |
| B | 0 | 1 | The two I/O ports are both in an output mode. |
| C | 1 | 0 | The controlled mode in which the processor C is controlled by another unit to operate as a slave unit. |
| D | 1 | 1 | The control mode in which the processor C controls another unit to operate as a master unit. |

Under the mode A, the contents of the flip-flops 118 and 119 of the mode register 14 are made to be both "0". Because of "0" output of the flip-flop 119, the output of the three-state buffers 24, 25, 26 and 27 are all inhibited, that is, the buffers are in floating state, and accordingly the terminals $PB_0$, $PB_1$, $PB_2$ and $PB_3$ of the second input/output port all operate as input terminals. Since the content of the flip-flop 118 is "0", a signal for driving the three-state buffer 45 is output from the OR gate 41, so that the terminal $PA_0$ (and the other PA terminals in the same PA terminal group) of the first input/output port serves as an output terminal. In other words, the first input/output port 11 (Fig. 3) is set in an output mode, whereas the second input/output port 12 is set in an input mode. Under such condition, if the instruction DB→PA is executed, a signal "1" is output from the OR gate 31 and the inverter 34, so that information on the data bus line $DB_0$ is once written in the register 44. Subsequently, this written information is read out of the Q-output terminal and is output to the terminal $PA_0$ via the buffer 45. Moreover, since the terminals $PB_0$, $PB_1$, $PB_2$ and $PB_3$ have been prepared as input terminals, when the input stage buffers 35, 36, 37 and 38 are driven in response to the instruction PB→DB, information applied through the external bus 17 is transferred to the internal bus DB. This interface mode A can be used as a keyboard scanning mode in which the first input/output port transmits a key strobe output to a keyboard as an external unit and the second input/output port receives a key matrix input from the keyboard.

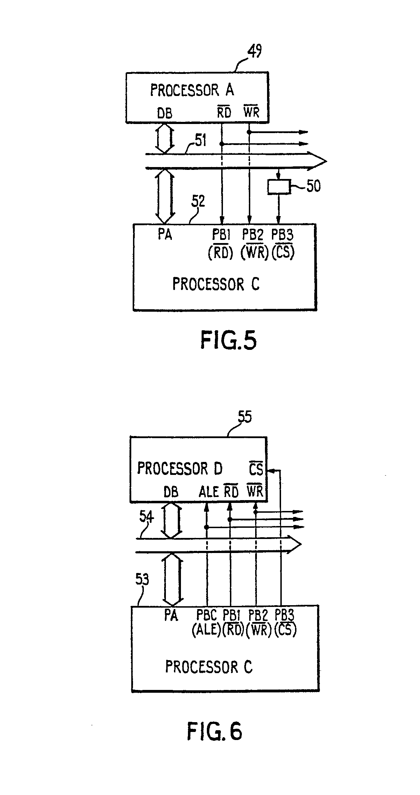

Under the mode C, the flip-flop 119 maintains "0" state and the content of the mode register flip-flop 118 is changed to "1". Accordingly, the output of the inverter 29 becomes "0". At this moment, since the output of the inverter 28 is "1", the IGFET's $Q_1$ and $Q_3$ are still held ON. Under such condition, if the RD and CS signals are input through the terminals $PB_1$ and $PB_3$, respectively, a signal "1" is output from the NOR gate 40 and hence the output stage buffer 45 is driven. Consequently, a signal corresponding to the data held in the register 44 is output to the terminal $PA_0$. The read-out information is transferred to an apparatus (not shown) addressed by the processor which has sent the RD signal. On the other hand, if a signal "0" is input through the terminals $PB_2$ and $PB_3$, a signal "1" is output from the NOR gate 30, hence the IGFET $Q_5$ is turned ON, and the register 44 is set in a write condition. As a result, information input from the external bus 16 to the terminal $PA_0$ is written in the register 44. Then, by executing the instruction PA→DB, the written information is transferred through the input stage buffer 46 to the internal bus signal line DB. Thus, under this mode where the contents of the mode register flip-flops 118 and 119 are set as "1" and "0", respectively, the second input/output port (12 in Fig. 3) becomes an input condition to receive control signals such as RD, WR, and CS, and the first input/output port (11 in Fig. 3) can take both input and output conditions, which are controlled by the control signals input through the terminals of the second input/output port. This is the controlled mode, or the slave mode, in which a micro-processor provided with the input/output circuit shown in Fig. 3 and 4 is controlled by an external processor. An example of a practical use of this slave mode is illustrated in Fig. 5, which shows a multi-processor system with a processor C 52 including the input/output circuit of Fig. 4 which operates as a controlled, or slave, unit that is controlled by another processor A 49. In Fig. 5, an external bus 51 interconnects the processors 49 and 52. A selection signal CS achieves the same role as the chip select signal which is employed upon addressing a memory chip. This selection signal is generated when the data for selecting the processor 52 have been decoded by a decoder 50. Accordingly, when a signal "1" (non-selection level) is input through the terminal $PB_3$ in Fig. 4, the NOR gates 30 and 40 both output a signal "0". As a result, even if the RD and WR signals are input through the terminals $PB_1$ and $PB_3$, respectively, the first input/output port (blocks 47, 48, . . .) is not controlled thereby at all.

Now back to Figs. 3 and 4, the content of the mode register flip-flop 118 is set to be "0" and the content of the mode register flip-flop 119 is "1", to attain the interface mode B shown in Table 1. Under such conditions, the outputs of the inverter 29 and the OR gate 41 both become "1" and hence the buffer 45 becomes active. Accordingly, the information set in the register 44 is output through the terminal $PA_0$. This means that the first input/output port 11 (Fig. 3) is in an output mode. On the other hand, since a signal "0" is output from the NOR gate 30, the IGFET $Q_6$ is turned ON, and information on the internal signal bus line $DB_0$ is set in the register 44 via the IGFET $Q_6$. At this moment, the instruction DB→PA is executed and the register 44 executes a latch operation. In this case, as the content of the mode register flip-flop 119 is set at "1", the output stage buffers 24, 25, 26 and 27 become active, and hence the Q-output signals of the flip-flops 120, 121, 122 and 123 are transferred to the terminals $PB_0 \sim PB_3$. In other words, the second input/output port 12 (Fig. 3) is also in an output mode. This interface mode B can be used as a display mode for driving such a display device that each digit consists of a plurality of segments. The first input/output port is used to transmit a segment device output to the display device, and the second input/output port to transmit a digit-drive output.

Under the fourth mode D, the contents of the mode register flip-flops 118 and 119 are both "1". Therefore, the output stage buffers 24, 25, 26 and 27 become active, so that the terminals $PB_0 \sim PB_3$ are used as output terminals. In this instance, the enhancement type IGFET's $Q_2$ and $Q_4$ are both turned ON, and the output from the buffer 25 is input to the NOR gate 40 through the IGFET $Q_4$. When the clock signal $\phi_{PB}$ changes from "0" to "1" in response to a microinstruction, the flip-flops 120, 121, 122 and 123, respectively, latch the information on the internal bus $DB_0 \sim DB_3$ and output them. At this moment, due to the output of "1" through the terminal $PB_0$, the output of the AND gate 39 becomes "1", and thereby the signal set in the register 44 is output through the terminal $PA_0$. In other words, by outputting "1" through the terminal $PB_0$ (ALE), the first input/ output port 11 (Fig. 3) takes an output mode. This interface mode D is the control, or master, mode where the second input/output port transmits to an external unit control signals such as RD, WR and ALE to control that external unit, while the first input/output port inputs or outputs data from or to the external unit. Under this master mode, a system such as shown in Fig. 6 may be constructed in which a processor C 53 including the input/output circuit shown in Fig. 4 operates as a control or master, unit and a processor D 55 (or a peripheral equipment, a memory, etc.) operates as a controlled, or slave, unit. More particularly, by the processor C 53 outputting "1" from the terminal $PB_0$, the terminals PA are used as a terminal for outputting an address, and the address data are transferred from the terminals PA to an external bus 54. The processor D 55 receives the transferred address, and as soon as the terminal PB (ALE) becomes "0", the reception is terminated. In this case, the terminals PA of the processor C 53 become an input condition because the output of the OR gate 41 in Fig. 4 becomes "0". On the other hand, owing to the fact that the signal at the terminal $PB_1$ (RD) is "1" and a signal "0" is output from the terminals $PB_2$ (WR) and $PB_3$ (CS), the output stage buffer 45 becomes active, so that information latched in response to the microinstruction DB→PA is transferred from the terminals PA. This information is output to the external bus 54 in Fig. 6 and is further transmitted to the terminals DB of the processor D 55. In this case, when the output from the terminal $PB_2$ (WR) shown in Fig. 4 becomes "1", the write processing of information to the processor D 55 is terminated. Then the terminals PA again take an input condition. If a signal "1" is output from the terminal $PB_2$ and a signal "0" is output from the terminals $PB_1$, $PB_0$ and $PB_3$, then the output of the NOR gate 40 is turned to "0" and the output stage buffer 45 becomes a floating condition. In other words, the first input/output port 11 shown in Fig. 3 becomes an input condition. As a result, information transmitted from the processor D (55 in Fig. 6) is set in the register 44 through the data bus 54.

As described above, by providing two flip-flops 118 and 119 of the mode register, four kinds of interface modes A, B, C and D as shown in Table 1 above can be set selectively.

As explained in detail above, according to the illustrated embodiment of the present invention, by setting data for designating operating mode in a mode register, a processor can be used under four modes including the master mode and the slave mode. In addition, since a port control circuit can be used in common when a processor operates as a master and when it operates as a slave, the processor can be reduced in size and also lowered in cost. Moreover, for the output terminals ($PB_1$, $PB_2$) of the RD and WR signals when the processor operates as a master, and for the input terminals ($PB_1$, $PB_2$) of the RD and WR signals when the processor operates as a slave, the same terminals can be used effectively. Still further, since these input/output terminals of the RD and WR signals can be made common with information transmission terminals more effective utilization of the terminals can be achieved. The proposed arrangement is especially effective for an integrated circuit chip having a severely limited number of terminals. Furthermore, as there is no need to allot a part of the information transmission terminals independently as terminals for the RD and WR signals, the information can be transmitted in a parallel form. In addition, as shown in Figs. 5 and 6, processors can be directly coupled to each other by making use of an external bus. Accordingly high-speed transmission of information becomes possible. Especially the proposed arrangement is extremely effective in a multi-processor system.

It is to be noted that while an example in which the terminals for the RD and WR signals are made common with the terminals for information transmission (port B) was presented in the preferred embodiment shown in Fig. 4, these respective sets of terminals could be provided independently of each other. In addition, while the processors was designed such that the internally generated RD, WR and other control signals may control the input/output port A through the internal bus, delay type flip-flops 120~123 and buffers 24~27, modification could be made such that these signals may be input directly from the internal bus to the port control circuit.

Furthermore, upon setting the data in the flip-flops 118 and 119 of the mode register, modification could be made such that data are applied externally and these data are set in the mode register through the terminals $PB_0$ and $PB_1$, the input buffers 35 and 36 and the internal bus signal lines $DB_0$ and $DB_1$. As a result, it becomes possible not only to set operating mode within the processor but also to externally and directly set the operating mode. Still further, the input/output circuit in Fig. 4 could be provided on the side of a memory or other controlled devices or on the side of other micro-processors.

An embodiment of the present invention enables reduction of a number of used terminals is achieved by employing the terminals normally used for input and/or output of data for the purpose of input and/or output of control signals (RD, WR signals or the like), instead of employing the mode register for designating the input-output condition of the second input/output port, it is also possible that the control signals input to or output from the second input/output port are made different from the normal data signals (for instance, by making the logic amplitudes of the control signals and the data signals different from each other, or by adding a code for discriminating the control signals from the data) and the input/output condition of the first input/output port is controlled by detecting the difference. Still further, it is also possible that in response to the content of the mode register the second input/output port is set in an input condition, and the input/output condition of the first input/output port is controlled by only the control signal which is input at that moment. Or else, the input/output condition of the first input/output port could be controlled by cooperation of the aforementioned control signals and the contents of the mode register.

**Claims**

1. An information processing unit comprising an internal bus (15) for transferring information, first external terminals (16), a first input-output port (11) coupled to said first external terminals (16) and said internal bus (15) for transferring information in a first direction from said internal bus (15) to said first external terminals (16) and in a second direction from said first external terminals (16) to said internal bus (15), and second external terminals (17) characterised in that said information processing unit further includes means (20) for generating a first input control signal and a first output control signal, means for coupling the first signal generating means to said second external terminals for selectively transmitting said first signals externally, a receiving means (21) coupled to said second external terminals (17) for receiving a second input control signal and a second output control signal transferred from outside the unit through said second external terminals (17), control means (13) coupled to said first input-output port (11) and controlling the direction of information transfer in said first input-output port (11) in response to either said first input and output control signals or said second input and output control signals, and selecting means (14, 18) either for selecting said first input and output control signals to be applied to said control means (13) when said unit operates as a master in which case the coupling means are also enabled so that the first input and output control signals are transmitted externally, or for selecting, said second input and output control signals to be applied to said control means when said unit operates as a slave.

2. The unit of Claim 1, characterised in that said first input-output port (11) transfers the information in said second direction in response to said first output control signal and said second input control signal, and in said first direction in response to said first input control signal and said second output control signal.

3. The unit of Claim 2, characterised in that said selecting means (14, 18) has a data generator circuit (18) generating a mode data for designating a master mode and a slave mode, and a mode register (14) outputting a selection signal according to said mode data.

4. The unit of Claim 3, characterised in that said coupling means comprises a second input-output port (12) coupled to said internal bus (15) and said second external terminals (17) for transferring information between said internal bus (15) and said second external terminals (17), said generating means (20) being coupled to said second external terminals (17) via said internal bus (15) and via said second input-output port (12).

5. The unit of Claim 4, characterised in that said control means (13) has switches ($Q_1$ to $Q_4$) receiving said selection signal selecting either said first input and output control signals or said second input and output control signals.

6. The unit of Claim 5, characterised in that said coupling means is inactivated by said selection signal (C13) when said second input and output signals are received by said receiving means (21).

**Patentansprüche**

1. Informationsverarbeitungseinheit mit einem internen Bus (15) zum Übertragen von Informationen, ersten Außenanschlüssen (16), einer ersten mit den ersten Außenanschlüssen (16) und dem internen Bus (15) verbundenen Eingabe-Ausgabe-Einheit (11) zum Übertragen von Informationen in einer ersten Richtung von dem internen Bus (15) zu den ersten Außenanschlüssen (16) und in einer zweiten Richtung von den ersten Außenanschlüssen (16) zu dem internen Bus (15), und mit zweiten Außenanschlüssen (17), ferner gekennzeichnet durch einen Generator (20) zum Erzeugen eines ersten Eingabe-Steuersignals und eines ersten Ausgabe-Steuersignals, Einrichtungen zum Verbinden des Generators für die ersten Signale mit den zweiten Außenanschlüssen zum selektiven Übertragen der ersten Signale nach außen, eine mit den zweiten Außenanschlüssen (17) verbundene Empfangseinrichtung (21) zum Empfangen eines zweiten Eingabe-Steuersignals und eines zweiten Ausgabe-Steuersignals, das von außerhalb der Einheit über die zweiten Außenanschlüsse (17) übertragen wird, Steuereinrichtungen (13), die mit der ersten Eingabe-Ausgabe-Einheit (11) verbunden sind und die die Richtung der Imformationsübertragung in der ersten Eingabe-Ausgabe-Einheit (11) in Abhängigkeit von entweder dem ersten Eingabe- und Ausgabe-Steuersignal oder dem zweiten Eingabe- und Ausgabe-Steuersignal steuert, und Wähleinrichtungen (14, 18) die entweder, wenn die Einheit als Hauptgerät arbeitet, zum Auswählen des der Steuereinrichtung (13) zuzuführenden ersten Eingabe- und Ausgabe-Steuersignals dient, wobei in diesem Fall die Verbindungseinrichtung ebenfalls in Arbeitslage geschaltet wird, so daß das erste Eingabe- und Ausgabe-Steuersignal nach außen übertragen werden, oder, wenn die Einheit als Zwischengerät arbeitet, zum Auswählen des der Steuereinrichtung zuzuführenden zweiten Eingabe- und Ausgabe-Signals dient.

2. Einheit nach Anspruch 1, dadurch gekennzeichnet, daß die erste Eingabe-Ausgabe-Einheit (11) die Informationen in die zweite Richtung in Abhängigkeit von dem ersten Ausgabe-Steuersignal und dem zweiten Eingabe-Steuersignal und in die erste Richtung in Abhängigkeit von dem ersten Eingabe-Steuersignal und dem zweiten Ausgabe-Steuersignal überträgt.

3. Einheit nach Anspruch 2, dadurch gekennzeichnet, daß die Wähleinrichtungen (14, 18) eine Daten-Generatorschaltung (18), die Arbeitsmode-Daten zum Bezeichnen eines Hauptgerät-Arbeitsmodus und eines Zwischengerät-Arbeitsmodus erzeugt, und ein Arbeitsmode-Register (14) aufweist, das ein den Arbeitsmode-Daten entsprechendes Wählsignal ausgibt.

4. Einheit nach Anspruch 3, dadurch gekennzeichnet, daß die Verbindungseinrichtung eine zweite mit dem internen Bus (15) und den zweiten Außenanschlüssen (17) verbundenen Eingabe-Ausgabe-Einheit (12) zum Übertragen von Informationen zwischen dem internen Bus (15) und den zweiten Außenanschlüssen (17) aufweist, wobei der Generator (20) mit dem zweiten Außenanschlüssen (17) über den internen Bus (15) und der zweiten Eingabe-Ausgabe-Einheit (12) verbunden ist.

5. Einheit nach Anspruch 4, dadurch gekennzeichnet, daß die Steuereinrichtungen (13) Schalter ($Q_1$ bis $Q_4$) aufweisen, die zum Wählen entweder des ersten Eingabe- und Ausgabe-Steuersignals oder des zweiten Eingabe- und Ausgabe-Steuersignals das Auswählsignal empfangen.

6. Einheit nach Anspruch 5, dadurch gekennzeichnet, daß die Verbindungseinrichtung durch das Auswählsignals (C13) deaktiviert wird, wenn das zweite Eingabe- und Ausgabe-Signal von der Empfängereinrichtung (21) empfangen wird.

**Revendications**

1. Unité de traitement d'information comprenant un bus intérieur (15) pour transférer une information, des premières bornes extérieures (16), un premier point d'entrée-sortie (11) couplé aux premières bornes extérieures (16) et au bus interne (15) pour transférer une information dans une première direction entre le bus intérieur (15) et les premières bornes extérieures (16) et dans une seconde direction entre les premières bornes extérieures (16) et le bus intérieur (15), et des secondes bornes extérieures (17), caractérisée en ce que l'unité de traitement d'information comprend en outre un moyen (20) pour produire un premier signal de commande d'entrée et un premier signal de commande de sortie, un moyen pour coupler le premier moyen de production de signal aux secondes bornes extérieures afin de transmettre sélectivement lesdits premiers signaux extérieurement, un moyen de réception (21) couplé aux secondes bornes extérieures (17) pour recevoir un second signal de commande d'entrée et un second signal de commande de sortie transférés à partir de l'extérieur de l'unité par l'intermédiaire des secondes bornes extérieures (17), un moyen de commande (13) couplé au premier point d'entrée-sortie (11) et commandant le sens de transfert de l'information dans le premier point d'entrée-sortie (11) en réponse soit aux premiers signaux de commande d'entrée et de sortie soit aux seconds signaux de commande d'entrée et de sortie, et un moyen de sélection (14, 18) soit pour sélectionner les premiers signaux de commande d'entrée et de sortie à appliquer au moyen de commande (13) lorsque ladite unité fonctionne en unité pilote, auquel cas les moyen de couplage est également validé de sorte que les premiers signaux de commande d'entrée et de sortie sont transmis extérieurement, soit pour sélectionner les seconds signaux d'entrée et de sortie à appliquer au moyen de commande lorsque ladite unité fonctionne en unité asservie.

2. Unité selon la revendication 1, caractérisée en ce que le premier point d'entrée-sortie (11) transfère l'information dans la seconde direction en réponse au premier signal de commande de sortie et au second signal de commande d'entrée, et dans la première direction en réponse au premier signal de commande d'entrée et au second signal de commande de sortie.

3. Unité selon la revendication 2, caractérisée en ce que le moyen de sélection (14, 18) comporte un circuit producteur de données (18) produisant une donnée de mode pour désigner un mode en pilote et un mode en asservi, et un registre de mode (14) sortant un signal de sélection selon la donnée de mode.

4. Unité selon la revendication 3, caractérisée en ce que le moyen de couplage comprend un second point d'entrée-sortie (12) couplé au bis intérieur (15) et aux secondes bornes extérieures (17) pour transférer l'information entre le bus intérieur (15) et les secondes bornes extérieures (17), le moyen producteur (20) étant couplé aux secondes bornes extérieures (17) via le bus intérieur (15) et via le second point d'entrée-sortie (12).

5. Unité selon la revendication 4, caractérisée en ce que le moyen de commande (13) comporte des commutateurs ($Q_1$ à $Q_4$) recevant le signal de sélection choisissant soit les premier signaux de commande d'entrée et de sortie soit les seconds signaux de commande d'entrée et de sortie.

6. Unité selon la revendication 5, caractérisée en ce que le moyen de couplage est inactivé par le signal de sélection (C13) lorsque les seconds signaux d'entrée et de sortie sont reçus par le moyen de réception (21).

FIG.1

FIG.2

FIG.3

FIG.4

0 057 511

FIG.5

FIG.6